# EUROPÄISCHE PATENTSCHRIFT

(11) **EP 1 567 739 B1**
(45) Veröffentlichungstag und Bekanntmachung des Hinweises auf die Patenterteilung: **11.07.2007**
(21) Anmeldenummer: 03788842.7
(22) Anmeldetag: 01.12.2003
(51) Int. Cl.: E05B 65/32

(54) **KRAFTFAHRZEUGTÜR**
MOTOR VEHICLE DOOR
PORTIERE DE VEHICULE AUTOMOBILE

(30) Priorität: 03.12.2002 DE 10256266
(43) Veröffentlichungstag der Anmeldung: 31.08.2005
(73) Patentinhaber: Kiekert Aktiengesellschaft, 42579 Heiligenhaus (DE)
(72) Erfinder: MENKE, Johannes-Theodor, 42551 Velbert (DE); NASS, Ulrich, 45475 Mülheim (DE); ZIMMERMAN, Gerhard, 42553 Velbert (DE); BÄUMCHEN, Carsten, 66649 Oberthal (DE); HERRMANN, Michael, 47560 Neukirchen-Vlyn (DE); KASPER, Andreas, 46117 Oberhausen (DE); ARMBRUSTER, Stefan, 42579 Heiligenhaus (DE); AXMANN, Jörg, 40878 Ratingen (DE); JOKIEL,Christian, 42579 Heiligenhaus (DE); KILL, Jürgen, 50670 Köln (DE); SCHÖNENBERG, Thomas, 51399 Burscheid (DE)
(86) Internationale Anmeldenummer: PCT/DE2003/003973
(87) Internationale Veröffentlichungsnummer: WO 2004/050404

(56) Entgegenhaltungen:
- DE-A- 10 057 352
- DE-A- 19 917 808
- DE-U- 29 723 462
- US-A1- 2002 089 187
- US-B1- 6 375 234

## Beschreibung

Die Erfindung betrifft eine Kraftfahrzeugtür, mit einem Kraftfahrzeug-Türschloss mit Gehäuse, und mit wenigstens einem Zusatzaggregat.

Eine Kraftfahrzeugtür der eingangs beschriebenen Gestaltung wird beispielhaft im Rahmen der DE 100 57 352 A1 angesprochen. Bei dem Zusatzaggregat handelt es sich im vorliegenden Fall um einen Antrieb für einen Fensterhebemechanismus. Der vorgenannte Antrieb, das Türschloss und der Fensterhebemechanismus sind an einem gemeinsamen Tragelement befestigt. Bei diesem Tragelement handelt es sich um eine Schlossträgerplatte.

Grundsätzlich bezweckt man mit dieser bekannten Vorgehensweise bereits erfolgreich, den von in der Regel Türverkleidungen abgedeckten Türinnenraum optimal zu nutzen. Denn an dieser Stelle werden nicht nur Zusatzaggregate wie die beschriebene Fensterhebeeinrichtung zunehmend platziert, sondern finden auch Seitenairbagsysteme, Lautsprecheranordnungen, Höhenverstelleinrichtungen für die Armlehne, Leuchtenanordnungen zur Erkennung von geöffneten Fahrzeugtüren, Steuergeräten für die Türspiegel sowie das Türschloss und die Spiegelheizung Platz.

Sämtliche vorbeschriebenen Zusatzaggregate müssen also mit dem vorhandenen (geringen) Bauraum auskommen. Das gilt erst recht, wenn der Türinnenraum noch für weitere Zwecke eingesetzt werden soll, beispielsweise als Vorratsraum für Reiseproviant (Flaschen, Dosen oder vergleichbare Verpackungen).

In der Vergangenheit hat man bereits versucht, diese Anhäufung an Zusatzaggregaten innerhalb der Kraftfahrzeugtür dadurch zusammenzufassen, dass als Türmodul-Trägerplatte bezeichnete Aggregateträger zum Einsatz kommen. Diese ermöglichen zwar eine vereinfachte Vormontage der einzelnen Zusatzaggregate, sind jedoch üblicherweise aus Metall hergestellt und führen deshalb zu einer nicht unerheblichen Gewichtserhöhung. Auch ist ihre Bauweise ausladend (vgl. DE 197 47 709 A1).

Hinzu kommt, dass die wachsende Modellvielfalt eine Vielzahl unterschiedlicher Türmodul-Trägerplatten erfordert, was die Konzeption, Lagerhaltung und Montage erschwert. Außerdem ist man natürlich grundsätzlich bestrebt, das Gewicht von Kraftfahrzeugen zu verringern und nicht zu erhöhen. Jedenfalls will die Erfindung hier insgesamt Abhilfe schaffen.

Der Erfindung liegt das technische Problem zugrunde, eine Kraftfahrzeugtür der eingangs beschriebenen Ausgestaltung so weiter zu entwickeln, dass bei vereinfachtem Aufbau eine Gewichtsreduzierung sowie eine optimierte Raumnutzung im Innern erzielt werden.

Zur Lösung dieser technischen Problemstellungen ist eine gattungsgemäße Kraftfahrzeugtür im Rahmen der Erfindung dadurch gekennzeichnet, dass das Zusatzaggregat an das Gehäuse des Kraftfahrzeug-Türschlosses angeschlossen ist. Im Gegensatz zu der DE 100 57 352 A1 findet also keine zusätzliche Schlossträgerplatte Verwendung, sondern übernimmt vielmehr das Gehäuse des Kraftfahrzeug-Türschlosses die beschriebene Funktion.

Bei dem Kraftfahrzeug-Türschloss kann es sich um jedwede denkbare Konstruktion handeln, beispielsweise ein solches, wie es in der DE 297 23 462 U1 beschrieben wird. Dann sind wie üblich ein Gesperre aus Drehfalle und Sperrklinke, mindest ein Betätigungshebel sowie wenigstens ein Verriegelungshebel realisiert, bei dem es sich um einen Zentralverriegelungshebel handelt. Das ist jedoch nicht zwingend.

Bei dem Kraftfahrzeug-Türschloss gemäß der DE 297 23 462 U1 nimmt ein Schlossblech das Gesperre aus Drehfalle und Sperrklinke auf. Das Schlossblech wird auch als Schlossplatte, Schlosskasten oder Schließelementschale bezeichnet. An das Schlossblech schließt sich das sogenannte Schlossgehäuse sowie ein das Schlossgehäuse abdeckender Schlossdeckel an. Das Schlossblech ist aus Metall gefertigt, während das Schlossgehäuse sowie der Schlossdeckel aus Kunststoff bestehen.

Über das Schlossblech wird das Türschloss in der Regel an die seitliche Stirnwand einer Kraftfahrzeugtür angeschlossen, z. B. mit dieser verschraubt. Der Schlossdeckel ist in der Regel dem Schlossblech gegenüberliegend in Richtung auf den Türinnenraum angeordnet.

Im Zusammenhang mit der vorliegenden Erfindung meint Gehäuse die die Schlossmechanik insgesamt umgebende Umhüllung bzw. Ummantelung. Diese kann ein-, zwei- oder sogar dreiteilig ausgeführt sein, wobei bei einer zweiteiligen Ausführungsform der Schlossdeckel Bestandteil des Schlossgehäuses ist und neben das Schlossblech bzw. den Schlosskasten tritt. Das Gehäuse kann insgesamt, wie dies in der DE 199 20 278 A1 beschrieben wird, vollständig geschlossen ausgebildet sein oder aber mehr oder weniger große Öffnungen besitzen.

Im Rahmen der Erfindung lässt sich das Zusatzaggregat bevorzugt an der nach außen weisenden Oberfläche des Schlossgehäuses, und zwar bei einteiliger Ausführungsform der Abdeckung aus Schlossgehäuse und Schlossdeckel an der dem Schlossblech gegenüberliegenden Gehäuse-Oberfläche anbringen. Bei einer zweiteiligen Gehäuseausbildung wird diese Oberfläche von dem separaten Schlossdeckel gebildet, welcher in diesem Fall das Zusatzaggregat trägt. Der Schlossdeckel übernimmt also eine zumindest zweifache Funktion, einerseits zur Abdichtung des Kraftfahrzeugtürschlosses im Ganzen und andererseits als Halter bzw. Aufnahmeeinrichtung für ein oder mehrere Zusatzaggregate. Dabei kann das Zusatzaggregat in einer Aufnahme des Gehäuses bzw. des Schlossdeckels befestigt sein, wobei übliche Befestigungsmaßnahmen, wie Verschrauben, Vernieten oder Verclipsen, denkbar sind und umfasst werden.

Vorzugsweise bestehen das Schlossgehäuse und der Schlossdeckel aus Kunststoff, wobei sich thermoplastischer Kunststoff als besonders geeignet herausgestellt hat. Ganz besonders bevorzugt ist in diesem Zusammenhang die Verwendung von Polybutylenterephthalat-Kunststoff (PBT), wobei je nach Gewicht und Volumen des daran anzuschließenden Zusatzaggregates für diesen Verwendungszweck mit einem Glasfaseranteil von bis zu 30 Vol. % gearbeitet wird und für eine entsprechende Verstärkung sorgt.

Außerdem hat es sich als günstig erwiesen, wenn das Schlossgehäuse und folglich der Schlossdeckel bei Verwendung als Aggregateträger mit einer zusätzlichen Axialabstützung ausgerüstet werden. Hierbei handelt es sich in der Regel um einen Ausleger aus Metall, welcher an das ebenfalls aus Metall bestehende Schlossblech bzw. den Schlosskasten angeschlossen ist. Zusätzlich mag der Schlossdeckel zur weiteren Versteifung mindestens eine Verrippung aufweisen, wie mit Bezug zur Figurenbeschreibung noch näher erläutert wird.

Eine Betätigungs- und/oder Schließvorrichtung arbeitet nicht nur auf das beschriebene Kraftfahrzeug-Türschloss, sondern mag beispielsweise auch einen Tragbügel zur Aufnahme des Türaußengriffes und/oder Türinnengriffes aufweisen, wie er in der EP 0 400 505 B1 beschrieben wird. In diesem Fall formen der entsprechende Türgriff, der Tragbügel und das Türschloss ein kompaktes Einbaumodul, welches auch als Schlossmodul bezeichnet wird. Im Rahmen der Erfindung sind wiederum das oder die Zusatzaggregate an das Gehäuse dieses Einbaumoduls angeschlossen.

Dabei mag das Gehäuse nicht nur das Kraftfahrzeug-Türschloss als solches aufnehmen, sondern kann - wie in der EP 0 400 505 B1 beschrieben - zusätzlich auch als Verbindung zum Türaußengriff dienen. Mit anderen Worten beinhaltet der beschriebene Anschluss des Zusatzaggregates an das Gehäuse selbstverständlich auch Varianten dergestalt, dass ein kompaktes Einbaumodul aus Betätigungs- und/oder Schließvorrichtung inklusive Kraftfahrzeug-Türschloss und Türinnen/Türaußengriff mit einem durchgängigen Gehäuse ausgerüstet ist, welches seinerseits das beschriebene Zusatzaggregat als Träger aufnimmt.

Um den Aufbau noch weiter zu vereinfachen, hat es sich als vorteilhaft erwiesen, zur Ansteuerung des Kraftfahrzeug-Türschlosses und des Zusatzaggregates eine gemeinsame Steuereinheit vorzusehen. In die gleiche Richtung zielen Maßnahmen, das Zusatzaggregat und das Türschloss an eine übereinstimmende Steuerplatine anzuschließen. Dadurch lässt sich die Verdrahtung besonders einfach darstellen.

Bei dem Zusatzaggregat mag es sich um einen Auslösemechanismus für einen Seitenairbag bzw. den gesamten Seitenairbag, eine Lautsprecheranordnung, eine Höhenverstelleinrichtung für die Armlehne, eine Leuchtenanordnung zur Erkennung von geöffneten Fahrzeugtüren, ein Steuergerät für das Türschloss, eine Spiegelheizungs-/Verstelleinrichtung usw. handeln. Bevorzugt findet jedoch eine Vereinigung von Kraftfahrzeug-Türschloss und Fensterheberanordnung als Zusatzaggregat statt.

Von besonderer Bedeutung ist schließlich, dass das Zusatzaggregat neben seinen originären Aufgaben wie z. B. Fenster heben, Spiegel verstellen etc. gleichzeitig oder zeitversetzt Schlossfunktionen wie z. B. elektrisches Öffnen, Zuziehen, Diebstahlsichern/-entsichern, Kindersicherung einlegen/lösen, Zentralverriegeln etc. ausführt. Das heißt, das Zusatzaggregat oder zumindest ein Antriebsmotor des Zusatzaggregates übernimmt eine Zwei- oder Mehrfachfunktion. So ist es beispielsweise denkbar, dass der Antrieb einer Fensterheberanordnung nicht nur für die gewünschte Fensterverstellung sorgt, sondern zugleich auch das angeschlossene Kraftfahrzeug-Türschloss im Sinne eines elektrischen Öffnens beaufschlagt. Darunter versteht man das motorische Ausschwenken der Sperrklinke, wie dies beispielsweise in der DE 195 30 726 A1 beschrieben wird. Alternativ oder zusätzlich kann auch eine Zuziehfunktion mit Hilfe des genannten Antriebes realisiert werden, wie sie beispielhaft Gegenstand der DE 199 42 360 A1 ist. Schließlich gehören zu den denkbaren Zusatzfunktionen das Einlegen der Diebstahlsicherung und/oder der Kindersicherung ebenso wie ihr Außerbetriebsetzen. Natürlich ist es auch möglich, den Antrieb für die Fensterhebeeinrichtung bzw. den Fensterhebermotor für die Zentralverriegelung des Kraftfahrzeug-Türschlosses einzusetzen.

Im Folgenden wird die Erfindung anhand einer lediglich ein Ausführungsbeispiel darstellenden Zeichnung näher erläutert; es zeigen:
- Fig. 1: eine Betätigungs- und/oder Schließvorrichtung in schematischer Darstellung zusammen mit einem Kraftfahrzeug-Türschloss und einer Fensterhebeeinrichtung als Bestandteile einer Kraftfahrzeugtür,
- **Fig. 2**: den Gegenstand nach Fig. 1, reduziert auf das Aggregat aus Kraftfahrzeug-Türschloss und Antrieb für die Fensterhebeeinrichtung in einer abgewandelten Ausgestaltung,
- **Fig. 3**: den Antrieb für die Fensterhebeeinrichtung entsprechend Fig. 1 oder 2 in Verbindung mit einer Steuerplatine des Kraftfahrzeug-Türschlosses in Explosionsdarstellung,
- **Fig. 4**: eine Kraftfahrzeugtür in Kombination mit den eingebauten Aggregaten nach Fig. 1 und
- **Fig. 5**: einen Schnitt durch Fig. 2 entlang der Linie A-A.

In den Figuren ist eine Kraftfahrzeugtür mit Betätigungsund/oder Schließvorrichtung gezeigt. Die Kraftfahrzeugtür verfügt in ihrem grundsätzlichen Aufbau über ein Kraftfahrzeug-Türschloss 1 mit Gehäuse 2, 3 sowie ein an das Gehäuse 2, 3 angeschlossenes Zusatzaggregat 4. Das Zusatzaggregat 4 arbeitet im Rahmen des Ausführungsbeispiels auf einen Fensterhebemechanismus 5. Folglich bilden Zusatzaggregat 4 und Fensterhebemechanismus 5 im Rahmen der Darstellung eine Fensterhebeeinrichtung 4, 5.

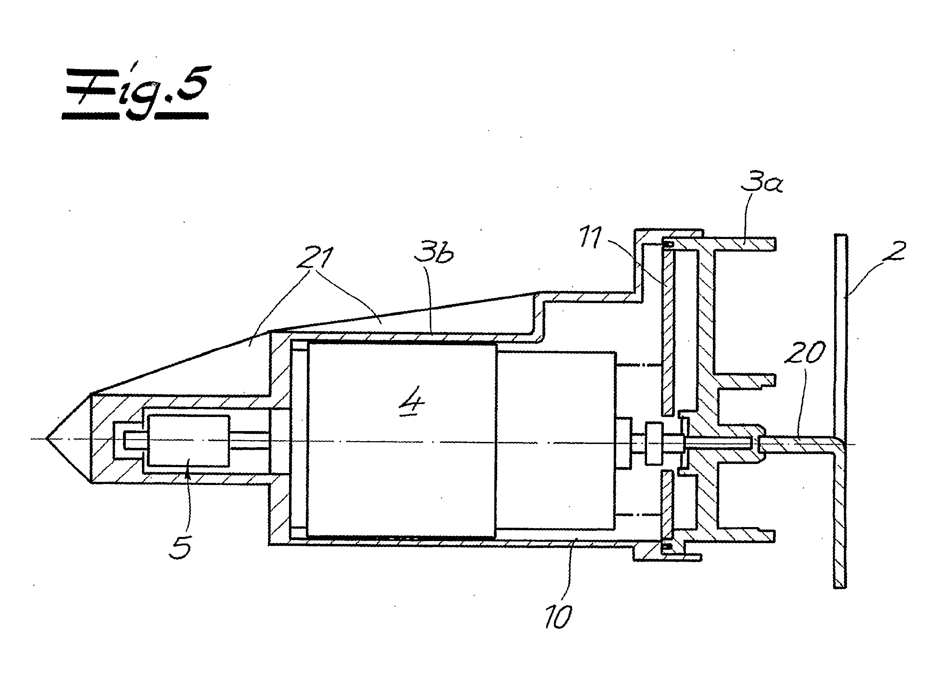

Man erkennt insbesondere anhand der Fig. 5, dass das Gehäuse 2, 3 bzw. die eine Schlossmechanik insgesamt umgebende Umhüllung grundsätzlich ein Schlossblech bzw. einen Schlosskasten 2 sowie ein zweiteiliges Abdeckung 3 bzw. 3a, 3b umfasst. Tatsächlich setzt sich die Abdeckung 3 bzw. 3a, 3b aus dem Schlossgehäuse 3a und dem Schlossdeckel 3b zusammen. Das Schlossgehäuse 3a wird von dem Schlossdeckel 3b verschlossen. Schlossgehäuse 3a und Schlossdeckel 3b können auch ein einteiliges Bauteil bzw. eine einteilige Abdeckung 3 formen. formen.

Der Schlosskasten bzw. das Schlossblech 2 dient dazu, das Türschloss beispielsweise an der seitlichen Stirnwand der Kraftfahrzeugtür anzuschließen. Demgegenüber erstreckt sich der Schlossdeckel 3b - dem Schlossblech 2 gegenüberliegend - in Richtung auf den Türinnenraum. Schlossgehäuse 3a und Schlossdeckel 3b sind aus Kunststoff gefertigt, während der Schlosskasten bzw. das Schlossblech 2 aus Blech bestehen. Das gilt auch für eine Axialabstützung 20, bei welcher es sich im Rahmen des Ausführungsbeispiels um einen in Bezug zum Schlosskasten 2 aufstehenden Vertikalsteg bzw. Ausleger 20 handelt. Dieser Vertikalsteg bzw. Ausleger 20 oder die Axialabstützung 20 sorgt dafür, dass das Schlossgehäuse 3a entsprechend der Darstellung in Fig. 5 stabilisiert wird. Das gilt dann natürlich gleichermaßen für den mit dem Schlossgehäuse 3a verbundenen Schlossdeckel 3b.

Die Axialabstützung 20 sorgt in Verbindung mit Rippen 21 am Schlossdeckel 3b insgesamt dafür, dass der Schlossdeckel 3b die erforderliche Stabilität aufweist, um nicht nur seiner originären Abdichtungsfunktion nachkommen zu können, sondern zusätzlich als Aggregateträger fungieren zu können. Das wird nachfolgend noch näher erläutert werden. In die gleiche Richtung zielen Maßnahmen, zumindest den Schlossdeckel 3b (in der Regel auch das Schlossgehäuse 3a) aus glasfaserverstärktem Kunststoff zu fertigen.

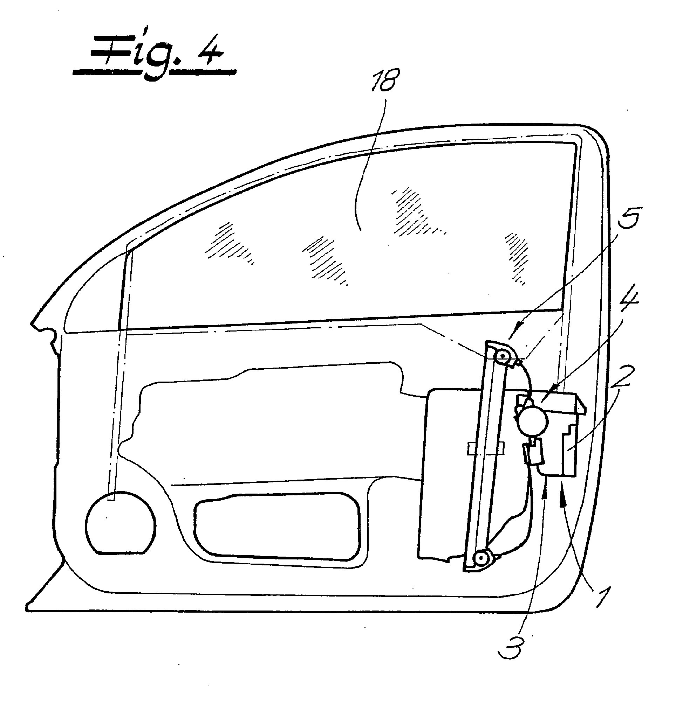

Im Rahmen des Ausführungsbeispiels ist das Zusatzaggregat 4 an das Gehäuse 2, 3 des Kraftfahrzeug-Türschlosses 1 angeschlossen. Selbstverständlich liegt es auch im Rahmen der Erfindung, den Fensterhebemechanismus 5 an dem Gehäuse 2, 3 zu befestigen, was jedoch nicht gezeigt ist. Die Einbausituation der vorgenannten Einzelteile 1 bis 5 lässt sich anhand der Fig. 4 erkennen.

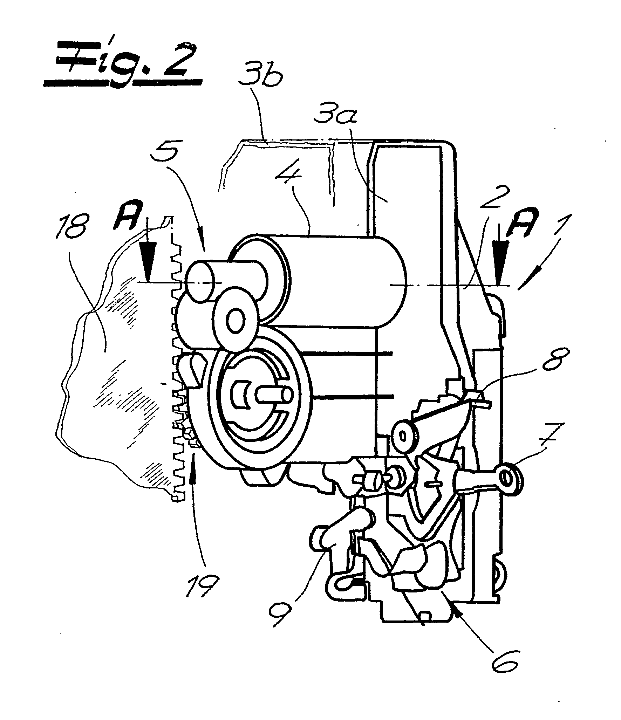

Das Kraftfahrzeug-Türschloss 1 entspricht von seinem Aufbau her im Wesentlichen demjenigen Kraftfahrzeug-Türschloss, wie es in der DE 297 23 462 U1 beschrieben wird. Man erkennt in Fig. 2 ein Gesperre 6 aus Drehfalle und Sperrklinke, einen Verriegelungshebel bzw. Zentralverriegelungshebel 7 und zwei Betätigungshebel 8, 9 für eine Innen- und Außenbetätigung.

Das Gehäuse 2, 3 des Türschlosses 1 setzt sich - wie bereits beschrieben - aus einem Schlosskasten 2 sowie der Abdeckung 3 bzw. dem Schlossgehäuse 3a und dem Schlossdeckel 3b zusammen. Das Zusatzaggregat 4 in Gestalt eines Fensterhebermotors 4 ist an der nach außen weisenden Oberfläche des Schlossdeckels 3b des Gehäuses 2, 3 angeordnet. Dazu verfügt der Schlossdeckel 3b über eine Aufnahme 10, in welche das Zusatzaggregat bzw. der Fensterhebermotor 4 eingesetzt wird und hier eine Befestigung durch Verschrauben, Vernieten, Verclipsen etc. erfährt (vgl. Fig. 5).

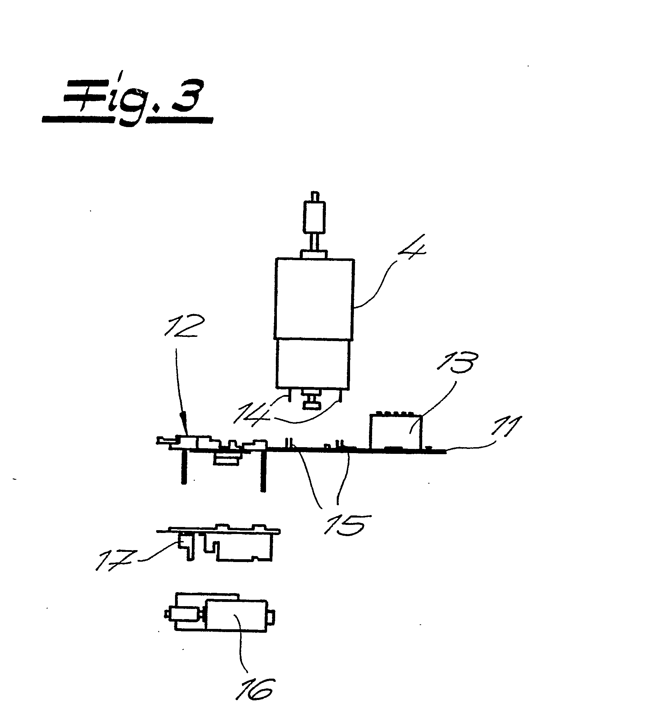

Anhand der Fig. 3 wird deutlich, dass das Zusatzaggregat 4 und das Türschloss 1 an eine übereinstimmende Steuerplatine 11 angeschlossen sind, wobei zur Ansteuerung des Kraftfahrzeug-Türschlosses 1 und des Zusatzaggregates 4 eine gemeinsame Steuereinheit 12 vorgesehen ist. Diese steht über einen Steckersockel 13 und eine darin eingesteckte Verbindungsleitung mit einer zentralen Steuereinheit im Kraftfahrzeuginnenraum in Verbindung. Man erkennt, dass das Zusatzaggregat 4 über Verbindungsstege 14 verfügt, mit deren Hilfe die elektrische Verbindung zur Steuerplatine 11 in dortigen Aufnahmebuchsen 15 vorgenommen wird. Ein zusätzlicher Antriebsmotor 16 für das Kraftfahrzeug-Türschloss 1 erfährt seine Festlegung an der Steuerplatine 11 mit Hilfe einer Halterung 17.

Zusatzaggregat 4 und Antriebsmotor 16 sind auf unterschiedlichen Seiten der Steuerplatine 11 angeordnet. Im Rahmen des Ausführungsbeispiels ist das Zusatzaggregat 4 bzw. der Fensterhebermotor 4 in der Lage, nicht nur eine lediglich in Fig. 4 angedeutete Fensterscheibe 18 auf und nieder zu bewegen, sondern kann darüber hinaus noch für ein elektrisches Öffnen des Kraftfahrzeug-Türschlosses 1 dergestalt sorgen, dass er die Sperrklinke des Gesperres 6 - falls gewünscht - aushebt, und zwar so wie dies in der DE 196 50 826 A1 prinzipiell beschrieben wird.

Selbstverständlich ist der Fensterhebermotor bzw. das Zusatzaggregat 4 auch in der Lage, andere Schlossfunktionen zu übernehmen. Hierzu mag das Zuziehen der Drehfalle des Gesperres 6 gehören, wie dies in der DE 199 42 360 A1 beschrieben wird. Auch die Bewegung des Verriegelungshebels 7 im Sinne einer Zentralverriegelungsfunktion ist denkbar.

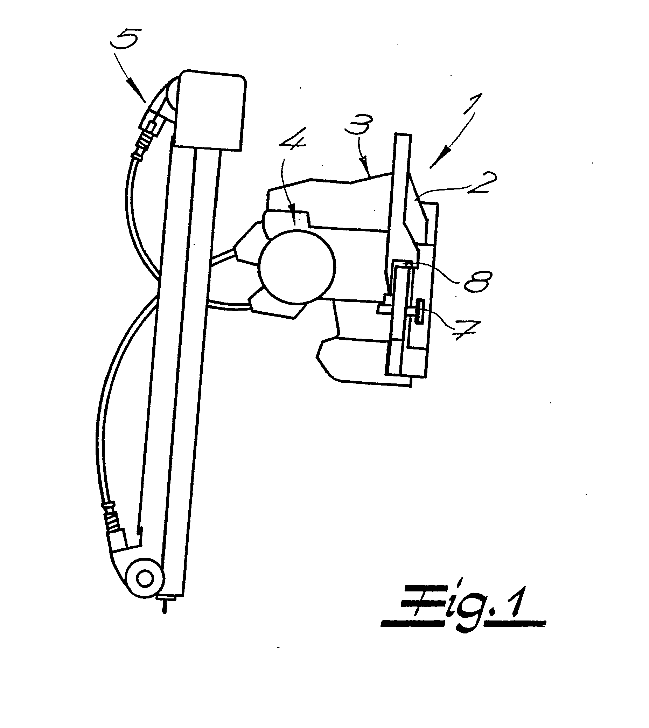

Der Fensterhebemechanismus 5 bzw. die Bewegung der Fensterscheibe 18 erfolgt dergestalt, dass diese ein- und/oder beidseitig über eine eingebrachte Verzahnung verfügt, in welche das Zusatzaggregat 4 über ein Zwischengetriebe 19 direkt eingreift (vgl. Fig. 2). Dabei kann die Verzahnung entweder direkt in das Scheibenmaterial eingebracht werden oder von einer Beschichtung oder Profilierung getragen werden, die ihrerseits mit der Fensterscheibe 18 verbunden wird. Es wird insofern Bezug genommen auf die DE 197 03 720 A1 sowie die DE 199 09 088 A1. Grundsätzlich kann die Fensterscheibe 18 aber auch mit Hilfe von Bowdenzügen verstellt werden, wie dies im Rahmen der Variante nach den Fig. 1 und 4 verfolgt wird.

## Patentansprüche

1. Kraftfahrzeugtür, mit einem Kraftfahrzeug-Türschloss (1) mit Gehäuse (2, 3), und mit wenigstens einem Zusatzaggregat (4), **dadurch gekennzeichnet, dass** das Zusatzaggregat (4) an das Gehäuse (2, 3) des Kraftfahrzeug-Türschlosses (1) angeschlossen ist.

2. Kraftfahrzeugtür nach Anspruch 1, **dadurch gekennzeichnet, dass** das Gehäuse (2, 3) einen Schlosskasten (2) sowie ein Schlossgehäuse (3a) und einen Schlossdeckel (3b) aufweist, wobei Schlossgehäuse (3a) und Schlossdeckel (3b) ein- oder zweiteilig ausgeführt sind.

3. Kraftfahrzeugtür nach Anspruch 1 oder 2, **dadurch gekennzeichnet, dass** das Zusatzaggregat (4) an der nach außen weisenden Oberfläche des Schlossdeckels (3b) des Gehäuses (2, 3) angeordnet ist.

4. Kraftfahrzeug nach einem der Ansprüche 1 bis 3, **dadurch gekennzeichnet, dass** das Zusatzaggregat (4) in einer Aufnahme (10) des Gehäuses (2, 3) befestigt ist.

5. Kraftfahrzeugtür nach einem der Ansprüche 1 bis 4, **dadurch gekennzeichnet, dass** zur Ansteuerung des Kraftfahrzeug-Türschlosses (1) und des Zusatzaggregates (4) eine gemeinsame Steuereinheit (12) vorgesehen ist.

6. Kraftfahrzeugtür nach einem der Ansprüche 1 bis 5, **dadurch gekennzeichnet, dass** das Zusatzaggregat (4) und das Türschloss (1) an eine übereinstimmende Steuerplatine (11) angeschlossen sind.

7. Kraftfahrzeugtür nach einem der Ansprüche 1 bis 6, **dadurch gekennzeichnet, dass** das Zusatzaggregat (4) neben seinen originären Aufgaben wie z. B. Fenster heben, Spiegel verstellen etc., gleichzeitig oder zeitversetzt Schlossfunktionen wie z. B. elektrisches Öffnen, Zuziehen, Diebstahlsichern/-entsichern, Kindersicherung einlegen und lösen, Zentralverriegeln etc. ausführt.

8. Kraftfahrzeugtür nach einem der Ansprüche 1 bis 7, **dadurch gekennzeichnet, dass** der Schlosskasten (2) eine Axialabstützung (20) für das Schlossgehäuse (3a) aufweist.

9. Kraftfahrzeugtür nach einem der Ansprüche 1 bis 8, **dadurch gekennzeichnet, dass** der Schlossdeckel (3b) zumindest eine Verrippung (21) zur Verstärkung besitzt.

## Claims

1. Vehicle door including a vehicle door latch (1) with a housing (2, 3) and with at least one additional assembly (4) **characterized in that** the additional assembly (4) is connected to the housing (2, 3) of the vehicle door latch (1).

2. Vehicle door according to claim 1, **characterized in that** the housing (2, 3) comprises a latch case (2) and a latch housing (3a) and a latch cover (3b), with the latch housing (3a) and latch cover (3b) consisting of one or two parts.

3. Vehicle door according to claim 1 or 2, **characterized in that** the additional assembly (4) is arranged on the external surface of the latch cover (3b) of the housing (2, 3).

4. Vehicle door according to claims 1 to 3, **characterized in that** the additional assembly (4) is secured in a seat (10) of the housing (2, 3).

5. Vehicle door according to claims 1 to 4, **characterized in that** a common control unit (12) is provided for controlling the vehicle door latch (1) and the additional assembly (4).

6. Vehicle door according to claims 1 to 5, **characterized in that** the additional assembly (4) and the door latch (1) are connected to a corresponding control board (11).

7. Vehicle door according to claims 1 to 6, **characterized in that** the additional assembly (4) apart from its original tasks, such as lifting windows, adjusting mirrors, etc. also carries out latch functions, such as i.e. electric opening, closing, double locking/unlocking, engaging/disengaging child lock, central locking, etc. at the same or at different times.

8. Vehicle door according to one of the claims 1 to 7, **characterized in that** the latch case (2) comprises an axial support (20) for the latch housing (3a).

9. Vehicle door according to one of the claims 1 to 8, **characterized in that** the latch cover (3b) contains at least one rib (21) for reinforcement.

## Revendications

1. Porte de véhicule à moteur avec une serrure de porte de véhicule à moteur (1) avec boîtier (2, 3) et au moins un organe supplémentaire (4) **caractérisée en ce que** l'organe supplémentaire (4) est associé au boîtier (2, 3) de la serrure de porte du véhicule à moteur (1).

2. Porte de véhicule à moteur selon la revendication 1 **caractérisée en ce que** le boîtier (2, 3) présente une platine (2) ainsi qu'un boîtier de serrure (3a) et un couvercle de serrure (3b), le boîtier de serrure (3a) et le couvercle de serrure (3b) étant exécutés en une ou deux pièces.

3. Porte de véhicule à moteur selon la revendication 1 ou 2 **caractérisée en ce que** l'organe supplémentaire (4) est placé à la surface dirigée vers l'extérieur du couvercle de serrure (3b) du boîtier (2, 3).

4. Porte de véhicule à moteur selon l'une des revendications 1 à 3 **caractérisée en ce que** l'organe supplémentaire (4) est fixé dans un logement (10) du boîtier (2, 3).

5. Porte de véhicule à moteur selon l'une des revendications 1 à 4 **caractérisée en ce qu'**une unité de commande (12) commune est prévue pour commander la serrure de porte de véhicule à moteur (1) et l'organe supplémentaire (4).

6. Porte de véhicule à moteur selon l'une des revendications 1 à 5 **caractérisée en ce que** l'organe supplémentaire (4) et la serrure de porte (1) sont associés à une platine de commande (11) concordante.

7. Porte de véhicule à moteur selon l'une des revendications 1 à 6 **caractérisée en ce que** l'organe supplémentaire (4), outre ses actions d'origines telles que lever une vitre, déplacer un rétroviseur, etc. exécute en même temps ou décalé dans le temps des fonctions de serrure telles qu'ouverture électrique, fermeture, activation/désactivation de la condamnation, activation et désactivation de la sécurité enfant, verrouillage centralisé, etc.

8. Porte de véhicule à moteur selon l'une des revendications 1 à 7 **caractérisée en ce que** la platine (2) présente un appui axial (20) pour le boîtier de serrure (3a).

9. Porte de véhicule à moteur selon l'une des revendications 1 à 8 **caractérisée en ce que** le couvercle de serrure (3b) possède au moins un nervurage (21) de renforcement.
